# EUROPEAN PATENT SPECIFICATION

(11) **EP 1 791 250 B1**
(45) Date of publication and mention of the grant of the patent: **23.09.2009**
(21) Application number: 06024394.6
(22) Date of filing: 24.11.2006
(51) Int. Cl.: H02P 6/08, H02P 6/10, H02M 7/5387

(54) **Semiconductor device, motor and motor drive unit including the same**
Halbleiter-Vorrichtung, Motor und Motorsteuerung, die diese enthält
Dispositif semi-conducteur, moteur et entraînement de moteur comprenant celui-ci

(30) Priority: 25.11.2005 JP 2005339590
(43) Date of publication of application: 30.05.2007
(73) Proprietor: HITACHI, LTD., Chiyoda-ku Tokyo 100-8280 (JP)
(72) Inventor: Sakurai, Kenji, Chiyoda-ku Tokyo 100-8220 (JP); Maeda, Daisuke, Chiyoda-ku Tokyo 100-8220 (JP); Endo, Tsunehiro, Chiyoda-ku Tokyo 100-8220 (JP); Hasegawa, Hiroyuki, Chiyoda-ku Tokyo 100-8220 (JP); Utsumi, Tomoyuki, Chiyoda-ku Tokyo 100-8220 (JP)
(74) Representative: Erny, Tobias

(56) References cited:
- JP-A- 2001 314 089
- US-A- 5 258 696
- US-A- 5 280 228
- US-A1- 2005 201 129

## Description

### BACKGROUND OF THE INVENTION

### Field of the invention

The present invention relates to a semiconductor device, a motor and a motor drive unit including the same, and in particular, to the semiconductor device performing a sine wave drive and the motor and motor drive unit including the same.

### Description of the Related Art

In recent years, inverter-controlled three-phase brushless motors are widely adopted as the motors for electric home appliances and industries. In particular, price competition is severe as to the electric home appliances, where provision of a low-cost inverter apparatus is desired. For that reason, the method used for the inverter is a 120-degree rectangular wave drive method whereby a circuit configuration is relatively simple, motor efficiency can be high and cost is low.

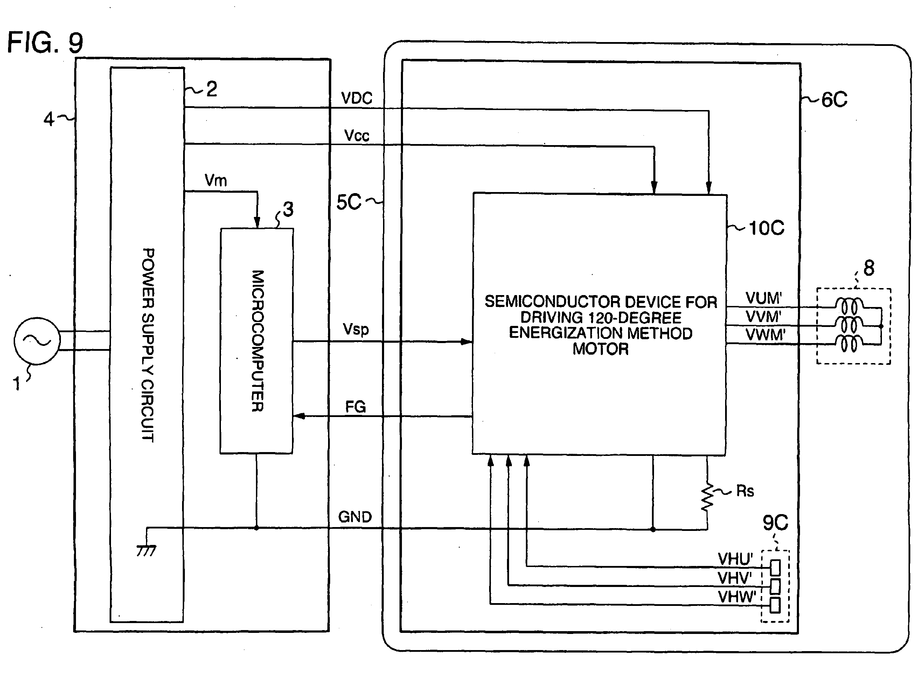

An example of the 120-degree rectangular wave drive method as a conventional technique will be described by using Fig. 9. In Fig. 9, reference numeral 1 denotes a commercial power supply, and 2 denotes a power supply circuit which generates VDC, Vcc and Vm based on an AC voltage from the commercial power supply 1. The VDC is a main power supply voltage for driving the inverter of the motor, the Vcc is a driving circuit power supply voltage of a semiconductor device 10 C for driving a 120-degree rectangular wave drive method motor, and the Vm is the power supply voltage for a microcomputer 3. The microcomputer 3 outputs a speed command signal Vsp to a motor 5C, and inputs a revolution signal FG which is outputted from the motor 5C. The power supply circuit 2 and the microcomputer 3 are placed on a first substrate 4.

The motor 5C has a build-in board 6C built therein. The semiconductor device 10 C for driving a 120-degree rectangular wave drive method motor, a Hall IC 9C and a shunt resistance Rs are placed on the build-in board 6C. A coil 8 is connected to an output terminal of the semiconductor device 10 C for driving a 120-degree rectangular wave drive method motor.

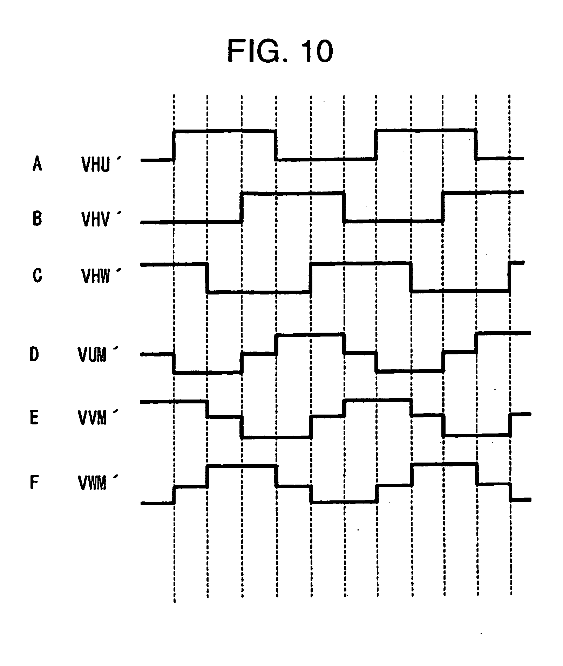

Fig. 10 is a timing chart of the 120-degree rectangular wave drive method. Parts A to C of Fig. 10 show magnetic pole position signals VHU', VHV' and VHW', and parts D to F of Fig. 10 show general waveforms of output voltages VUM', VVM' and VWM'. The semiconductor device 10 C for driving a 120-degree rectangular wave drive method motor outputs an H signal and an L signal of a 120-degree period at an electrical angle based on the magnetic pole position signals VHU', VHV' and VHW'. The coil 8 has a current passing during this 120-degree period, and a 60-degree non-energization period exists between the 120-degree periods. If the motor is driven by the 120-degree rectangular wave drive method, noise is apt to be generated when driving the motor because a torque ripple of the motor becomes large.

There is a method called a sine wave drive method of putting a phase current of the motor in a pseudo-sine wave state as a method of reducing the noise. To drive the motor with high efficiency by the sine wave drive method, it is necessary to exert phase control on the phase current of the motor. In the case of exerting the phase control, however, it is necessary to use an expensive current sensor or perform high-level arithmetic processing by using an expensive microcomputer. It is an expensive system in comparison with the 120-degree rectangular wave drive method.

JP-A-2004-120841 (descriptions of paragraphs (0020) to (0025) and paragraphs (0046) to (0049)) describes a method of putting a phase current of the motor in a pseudo-sine wave state at low cost by using analog circuits.

The US 2005/0201129 A1 shows a control apparatus and a semiconductor apparatus of AC motors, capable of reducing torque ripple with a comparatively simple circuit corresponding to a high withstand voltage and capable of driving a motor when the rotational speed or load changes.

The US 5 280 228 describes a three-phase bridge inverter for controlling a motor with a variable speed including a drive circuit therefore and an overcurrent protection circuit on one integrated chip.

### SUMMARY OF THE INVENTION

If the motor is driven by the 120-degree rectangular wave drive method, the torque ripple of the motor becomes large. For that reason, noise is apt to be generated when driving the motor. In the case of the sine wave drive method of the conventional technique, it is necessary to use an expensive current sensor or perform high-level arithmetic processing by using an expensive microcomputer in order to exert the phase control on a phase current of the motor.

As for the method of putting a phase current of the motor in a pseudo-sine wave state described in JP-A-2004-120841 (descriptions of paragraphs (0020) to (0025) and paragraphs (0046) to (0049)), a torque ripple of the motor cannot be sufficiently reduced and a current phase is not controlled so that the motor cannot be driven with high efficiency.

The present invention solves the problem, and a further object thereof may be to simultaneously realize reduction in the torque ripple of the motor by the sine wave drive method and high-efficiency drive of the motor by current phase control.

A motor drive unit of the present invention is the one characterized by including: switching elements for driving a motor; and a driving circuit for driving the switching elements, and wherein: the motor drive unit has a current polarity detection function of detecting a current polarity of a phase current of the motor. The motor of the present invention has the motor drive unit built therein.

A three-phase motor of the present invention is the one having a motor drive semiconductor device, a control semiconductor device and at least one magnetic pole position detector built therein, wherein the motor drive semiconductor device is a one-package motor drive semiconductor device composed of one or multiple semiconductor chips, the semiconductor chip including: six switching elements for driving the three-phase motor; three output terminals for applying an output voltage to three terminals of a coil of the three-phase motor respectively; a driving circuit for driving the six switching elements; and six control signal input terminals for inputting six control signals for on/off-controlling the six switching elements respectively, and the control semiconductor device inputs a magnetic pole position signal outputted by the magnetic pole position detector and outputs the six control signals for on/off-controlling the six switching elements respectively; and the six control signals are inputted to six control input terminals of the motor drive semiconductor device.

According to the present invention, it is possible to simultaneously realize reduction in the torque ripple of the motor by the sine wave drive method and high-efficiency drive of the motor by current phase control.

The invention is precisely defined in claim 1. The dependent claims recite advantageous embodiments of the invention.

### BRIEF DESCRIPTION OF THE DRAWINGS

Fig. 1 is an explanatory diagram of a first embodiment;
Fig. 2 is a detailed explanatory diagram of a motor drive semiconductor device of the first embodiment;
Fig. 3 is an explanatory diagram of a current polarity detection circuit of the first embodiment;
Fig. 4 is a timing chart of the current polarity detection circuit shown in Fig. 3;
Fig. 5 is an explanatory diagram of another current polarity detection circuit of the first embodiment;
Fig. 6 is a timing chart of the other current polarity detection circuit shown in Fig. 5;
Fig. 7 is a timing chart showing an example of a control method of the first embodiment;
Fig. 8 is an explanatory diagram of a first structure example of a motor of a seventh embodiment;
Fig. 9 is an explanatory diagram of a conventional technique;
Fig. 10 is a timing chart of the conventional technique;
Fig. 11 is a diagram simply representing Fig. 1;
Fig. 12 is an explanatory diagram of a second embodiment;
Fig. 13 is an explanatory diagram of a third embodiment;
Fig. 14 is an explanatory diagram of a fourth embodiment;
Fig. 15 is a diagram describing details of a pre-drive semiconductor device and motor drive switching elements of the fourth embodiment;
Fig. 16 is an explanatory diagram of a fifth embodiment;
Fig. 17 is an explanatory diagram of a sixth embodiment;
Fig. 18 is an explanatory diagram of a second structure example of the motor of the seventh embodiment; and
Fig. 19 is an explanatory diagram of a third structure example of the motor of the seventh embodiment.

### DETAILED DESCRIPTION OF THE INVENTION

Details of the present invention will be described by using the drawings hereunder.

### [First Embodiment]

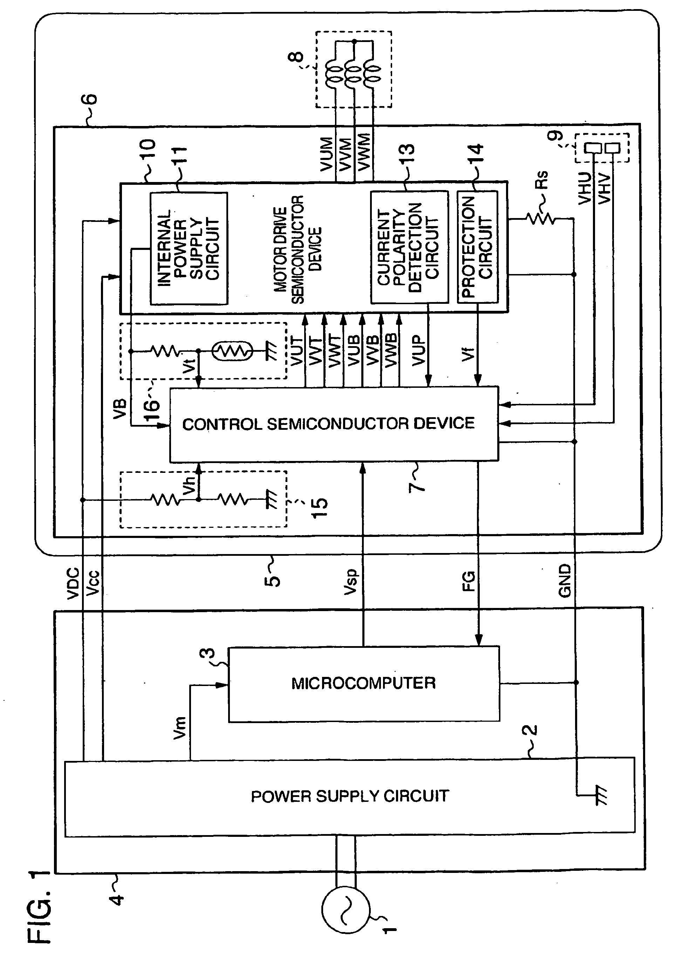

Fig. 1 is an explanatory diagram of this embodiment. In Fig. 1, reference numeral 1 denotes a commercial power supply. Reference numeral 2 of Fig. 1 denotes a power supply circuit which generates direct-current VDC, Vcc and Vm based on an alternating-current voltage from the commercial power supply 1. The VDC is a high voltage of approximately 141 V to approximately 450 V for instance, which is used as a high-voltage power supply voltage for driving the inverter of the motor. The Vcc is approximately 15 V for instance, which is a driving circuit power supply voltage used for a motor drive semiconductor device 10. The Vm is a power supply voltage for a microcomputer 3, which is 3 V to 5.5 V for instance. The power supply circuit 2 and the microcomputer 3 are placed on a first substrate 4.

The microcomputer 3 outputs a speed command signal Vsp, and inputs a revolution signal FG which is outputted from a motor 5. The microcomputer 3 adjusts the number of revolutions of the motor 5 by means of the speed command signal Vsp. As for the speed command signal Vsp, there are the cases of using an analog signal and the cases of using a pulse signal. In Fig. 1, a Vsp line and an FG line directly connect the microcomputer 3 with a control semiconductor device 7 by means of wiring. However, they may also be connected by way of a photo coupler or a buffer circuit. The microcomputer 3 may also output a pulsing speed command signal and convert that signal to an analog signal in a CR integration circuit consisting of a capacitor and a resistance so as to input an analog speed command signal to the control semiconductor device 7.

In Fig. 1, reference numeral 6 denotes a build-in board which is built into the motor 5. The control semiconductor device 7, a motor drive semiconductor device 10, a Hall IC 9, a shunt resistance Rs, a high-voltage power supply voltage detection circuit 15 and a temperature detection circuit 16 are placed on the build-in board 6.

Though not shown, the Hall IC 9 has the Vcc or VB used as the power supply voltage. There are also the cases where a lower-cost hall element is used instead of the Hall IC 9. The Hall IC 9 and the hall element are examples of a magnetic pole position detector, and they output a magnetic pole position signal which indicates a position of a permanent magnet rotor of the motor 5. In the case of the hall element, an output voltage of each individual hall element is a voltage between two terminals. As the output voltage of the hall element is normally a minute voltage of 1 V or less, it is necessary to amplify the signal by using an amplifier. In Fig. 1, two Hall ICs are used for the magnetic pole position detector. However, the number of the magnetic pole position detectors may also be three or one.

The control semiconductor device 7 of Fig. 1 has the power supply voltage VB, the speed command signal Vsp from the microcomputer 3, a current polarity signal VUP and a fault signal Vf from the motor drive semiconductor device 10, a high-voltage power supply voltage signal Vh from the high-voltage power supply voltage detection circuit 15, a temperature signal Vt from the temperature detection circuit 16 and magnetic pole position signals VHU and VHV from the Hall IC 9 inputted thereto. The control semiconductor device 7 may be either a general-purpose microcomputer or a motor drive-specific IC.

In Fig. 1, reference character VB denotes the power supply voltage of the control semiconductor device 7, which is 3 V to 5.5 V for instance. In Fig. 1, it is generated inside the motor drive semiconductor device 10. However, it may also be generated from the Vcc by an external regulator, a Zener diode or the like. It is also possible to input the Vm on the first substrate 4 to the control semiconductor device 7 instead of generating the power supply voltage for the control semiconductor device 7 inside the motor 5.

The control semiconductor device 7 outputs control signals VUT, VVT, VWT, VUB, VVB and VWB to the motor drive semiconductor device 10. The control signals VUT, VVT, VWT, VUB, VVB and VWB are the signals for controlling on and off of switching elements inside the motor drive semiconductor device 10. The control exerted by the control semiconductor device 7 will be described later.

The motor drive semiconductor device 10 includes an internal power supply circuit 11, a current polarity detection circuit 13 and a protection circuit 14. Though not shown in Fig. 1, it also includes six switching elements and a driving circuit for driving the switching elements and the like. The motor drive semiconductor device 10 outputs output voltages VUM, VVM and VWM from output terminals. Details of the motor drive semiconductor device 10 will be described later.

A coil 8 of the motor 5 is connected to the output terminals of the motor drive semiconductor device 10. The shunt resistance Rs is placed between lower arm switching elements in the motor drive semiconductor device 10 and a ground potential GND. The shunt resistance Rs is used for the sake of monitoring a current value of a current passing through the switching elements for instance.

The high-voltage power supply voltage detection circuit 15 is connected to the high-voltage power supply voltage VDC so as to output information on the high-voltage power supply voltage VDC as the high-voltage power supply voltage signal Vh. In the example of Fig. 1, the high-voltage power supply voltage VDC is converted to a low voltage and outputted by using two series-connected resistances.

The temperature detection circuit 16 outputs the temperature signal Vt including temperature information to a control semiconductor. In Fig. 1, the temperature detection circuit 16 is composed of a resistance and a thermistor as a temperature sensing element. The control semiconductor device 7 performs overheat protection in the case of an abnormally high temperature based on the temperature signal Vt by reducing the current passing through the coil of the motor, stopping the motor, or the like. This overheat protection function can prevent malfunction and destruction of the motor drive semiconductor device 10 and the control semiconductor device 7 at the abnormally high temperature for instance.

In the case of performing the overheat protection of the control semiconductor device 7 by using the temperature detection circuit 16, the thermistor should be placed in proximity to the control semiconductor device 7. As for the thermistors, there are the one of which resistance value has positive temperature dependence, the one of which resistance value has negative temperature dependence, the one of which resistance value drastically changes at a certain temperature and the like. Any thermistor may be used for the temperature detection circuit 16. It is also possible to use not only the thermistor but also a diode or a Si semiconductor temperature sensor as a temperature detection element.

In Fig. 1, the control semiconductor device 7, motor drive semiconductor device 10, high-voltage power supply voltage detection circuit 15, temperature detection circuit 16 and shunt resistance Rs are placed on the build-in board 6. However, they may also be placed on the first substrate 4.

In the case of applying the embodiment of Fig. 1 to a fan motor for sending air to an outdoor heat exchanger of an air conditioner, the first substrate 4 is a main substrate of an outdoor apparatus while the motor 5 is the fan motor of the outdoor apparatus.

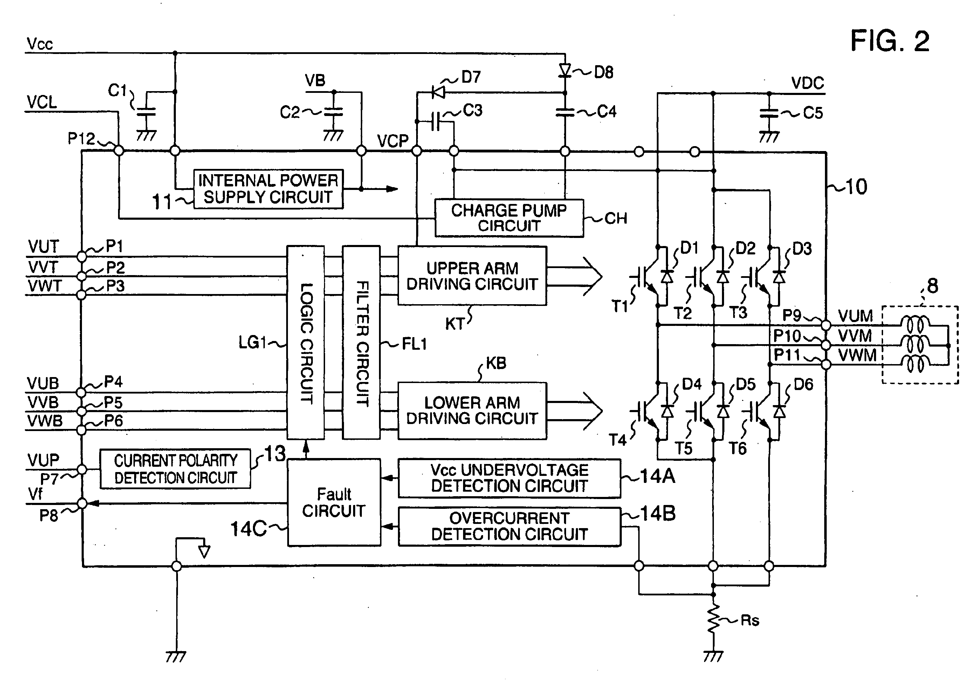

Next, details of the motor drive semiconductor device 10 will be described. Fig. 2 shows an example of a detail view of the motor drive semiconductor device 10. In Fig. 2, reference characters T1 to T6 are the six switching elements for driving the three-phase motor, where IGBTs which are power semiconductor switching elements are used in this embodiment. They may also be power MOSFETs or bipolar transistors. In Fig. 2, D1 to D6 are reflux diodes which are connected to the respective IGBTs back to back.

In Fig. 2, reference character P9 denotes an output terminal of a U phase, P10 denotes an output terminal of a V phase, and P11 denotes an output terminal of a W phase. These output terminals are connected to the coil 8 of the motor.

In Fig. 2, reference character VUT denotes a U phase upper arm control signal, which is inputted from a U phase upper arm control signal input terminal P1, and is sequentially transmitted from a logic circuit LG1 to a filter circuit FL1, an upper arm driving circuit KT and then to a U phase upper arm IGBT T1. In Fig. 2, reference character VVT denotes a V phase upper arm control signal, which is inputted from a V phase upper arm control signal input terminal P2, and is sequentially transmitted from the logic circuit LG1 to the filter circuit FL1, the upper arm driving circuit KT and then to a V phase upper arm IGBT T2. In Fig. 2, reference character VWT denotes a W phase upper arm control signal, which is inputted from a W phase upper arm control signal input terminal P3, and is sequentially transmitted from the logic circuit LG1 to the filter circuit FL1, the upper arm driving circuit KT and then to a W phase upper arm IGBT T3. In Fig. 2, reference character VUB denotes a U phase lower arm control signal, which is inputted from a U phase lower arm control signal input terminal P4, and is sequentially transmitted from the logic circuit LG1 to the filter circuit FL1, the lower arm driving circuit KB and then to a U phase lower arm IGBT T4. In Fig. 2, reference character VVB denotes a V phase lower arm control signal, which is inputted from a V phase lower arm control signal input terminal P5, and is sequentially transmitted from the logic circuit LG1 to the filter circuit FL1, the lower arm driving circuit KB and then to a V phase lower arm IGBT T5. In Fig. 2, reference character VWB denotes a W phase lower arm control signal, which is inputted from a W phase lower arm control signal input terminal P6, and is sequentially transmitted from the logic circuit LG1 to the filter circuit FL1, the lower arm driving circuit KB and then to a W phase lower arm IGBT T6.

In Fig. 2, a charge pump circuit CH is a circuit for generating a power supply voltage VCP for driving an upper arm IGBT. Diodes D7 and D8 and capacitors C3 and C4 are outside parts for the charge pump circuit. The diodes D7 and D8 may also be built into the motor drive semiconductor device 10. A clock signal VCL for operating the charge pump circuit CH is inputted from a clock signal input terminal P12 to the charge pump circuit CH. Though not shown in Fig. 1, the clock signal VCL is outputted by the control semiconductor device 7 for instance.

The internal power supply circuit 11 generates the power supply voltage VB of the control semiconductor device 7 based on the driving circuit power supply voltage Vcc. The power supply voltage VB of the control semiconductor device 7 is a voltage lower than the driving circuit power supply voltage Vcc. The VB is used as the power supply voltage of the control semiconductor device 7, and is also used as the power supply voltage in a part of the circuit in the motor drive semiconductor device 10. The current polarity detection circuit 13 detects a current polarity of the U phase for instance, and outputs the U phase current polarity signal VUP from a current polarity signal output terminal P7. The current polarity signal may also be the current polarity signal of the V phase or the W phase instead of the U phase.

A Vcc undervoltage detection circuit 14A monitors the driving circuit power supply voltage Vcc, and outputs a low voltage detection signal to a fault circuit 14C if the driving circuit power supply voltage Vcc becomes a certain threshold voltage or lower. An overcurrent detection circuit 14B outputs an overcurrent detection signal to the fault circuit 14C if the voltage of the shunt resistance Rs becomes a certain level or higher. Upon receiving the Vcc low voltage detection signal from the Vcc undervoltage detection circuit 14A or the overcurrent detection signal from the overcurrent detection circuit 14B, the fault circuit 14C outputs an off signal to the logic circuit LG1 and also outputs the fault signal Vf from a fault signal output terminal P8. Upon receiving the Vcc low voltage signal or the overcurrent detection signal, the fault circuit 14C outputs an off command signal to the logic circuit LG1. If the off command signal is inputted from the fault circuit 14C, the logic circuit LG1 outputs a signal for turning off all the IGBTs irrespective of H/L (High/Low) of the control signals VUT, VVT, VWT, VUB, VVB and VWB.

As described above, the motor drive semiconductor device 10 of this embodiment turns off the switching elements upon detecting an abnormality, such as an overcurrent or a Vcc low voltage. In the case of detecting an abnormality, however, the motor drive semiconductor device 10 may also output the fault signal Vf as occurrence of the abnormality to the control semiconductor device 7 without turning off the switching elements so as to have the control semiconductor device 7 output the control signal for turning off the switching elements.

Reference characters C1, C2 and C5 of Fig. 2 denote capacitors for stabilizing the power supply. In the case where the inside of the motor drive semiconductor device 10 is composed of one semiconductor chip, high voltage elements and low voltage elements are mixed in that one semiconductor chip. As for separation means of the elements in the semiconductor chip, dielectric isolation (DI), SOI (Silicon on Insulator), PN junction-separation and the like are used.

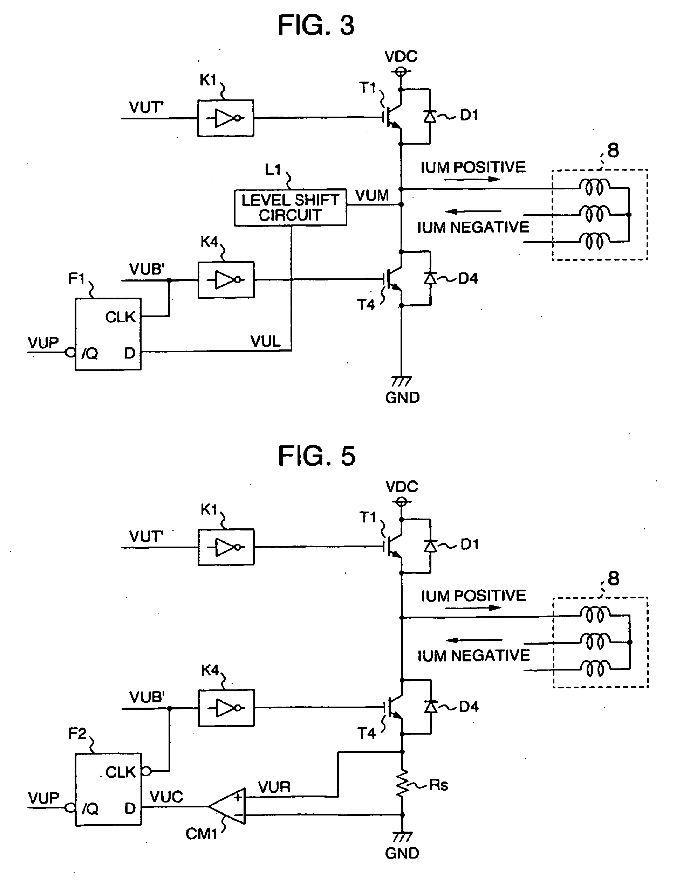

Next, details of the current polarity detection circuit 13 will be described. Fig. 3 is a first example of the current polarity detection circuit 13. Fig. 3 shows an example in which the current polarity detection circuit 13 detects a U phase current polarity.

As shown in Fig. 3, an inverter apparatus includes a U phase upper arm switching element T1, a U phase lower arm switching element T4, a U phase upper arm driving circuit K1 and a U phase lower arm driving circuit K4. The coil 8 is connected to a middle point between the U phase upper arm switching element T1 and the U phase lower arm switching element T4. The U phase upper arm switching element T1 has the U phase upper arm reflux diode D1 connected back to back thereto, and the U phase lower arm switching element T4 has the U phase lower arm reflux diode D4 connected back to back thereto.

The current polarity detection circuit 13 of this embodiment includes a level shift circuit L1 and a latch circuit F1. The level shift circuit L1 converts the U phase output voltage VUM to a lower voltage and outputs it. To be more precise, the level shift circuit L1 outputs a signal of a certain voltage level when the U phase output voltage VUM is approximately equal to the high-voltage power supply voltage VDC. This is referred to as an "H" signal hereunder. A zero-level voltage signal is outputted when the U phase output voltage VUM is approximately zero. This is referred to as an "L" signal hereunder. The voltage level of the "H" signal should be the level at which the latch circuit F1 can detect the "H" signal. In the case where the high-voltage power supply voltage VDC changes, the voltage level of the "H" signal may change depending on the high-voltage power supply voltage VDC within a voltage range in which the latch circuit F1 is can detect the "H" signal.

According to this embodiment, when both the U phase upper arm switching element T1 and U phase lower arm switching element T4 are off, the current polarity of the U phase is detected by monitoring an output voltage VUL of the level shift circuit L1 in timing of a rise of a U phase lower arm control signal VUB'.

The latch circuit F1 inverts the output voltage VUL of the level shift circuit L1 in timing of the rise of the U phase lower arm control signal VUB' so as to output it as the U phase current polarity signal VUP. The latch circuit F1 holds an immediately preceding signal until the timing of a next rise of the U phase lower arm control signal VUB'.

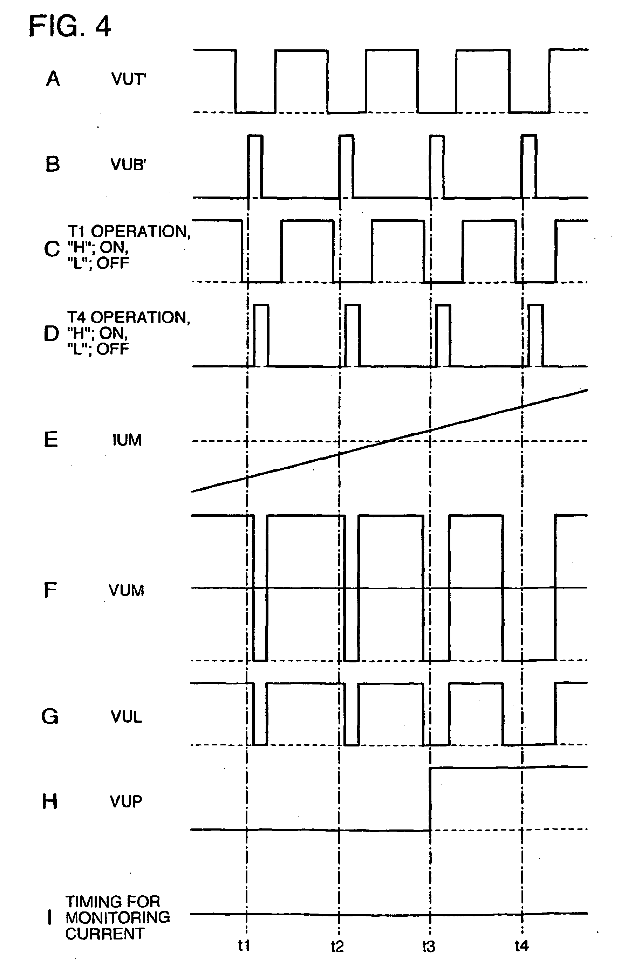

Fig. 4 is an example of a timing chart of the current polarity detection circuit 13 shown in Fig. 3. The operation of the current polarity detection circuit 13 in Fig. 3 will be described with reference to Fig. 4. Part A of Fig. 4 shows a U phase upper arm control signal VUT', and part B shows a U phase lower arm control signal VUB'. Part C of Fig. 4 shows an operation of the U phase upper arm switching element T1, and part D of Fig. 4 shows an operation of the U phase lower arm switching element T4. Reference character H denotes on, and L denotes off. Part E of Fig. 4 shows an IUM. The U-phase phase current IUM is a current flowing into the coil 8 from a U phase output terminal, where the polarity is positive when the current flows into the coil 8 while it is negative when the current flows out of the coil 8. Part F of Fig. 4 shows the U phase output voltage VUM, part G of Fig. 4 shows the output voltage VUL of the level shift circuit L1, and part H of Fig. 4 shows the output voltage of the latch circuit F1. Part I of Fig. 4 shows timing for monitoring the current, that is, the timing when the latch circuit F1 latches the output voltage VUL of the level shift circuit L1.

If part A of Fig. 4 is compared with part B, there is a provided section (dead time) in which the U phase upper arm control signal VUT' and the U phase lower arm control signal VUB' simultaneously become off. The section is provided in order to prevent the upper and lower arm switching elements from simultaneously becoming on.

As shown in part I of Fig. 4, the timing for monitoring the current is time points t1, t2, t3 and t4 when the U phase lower arm control signal VUB' of part B of Fig. 4 rises from "L" to "H". As is understandable by comparing part B of Fig. 4 with part D, the operation of the U phase lower arm switching element T4 is slightly delayed from the U phase lower arm control signal VUB'. Therefore, as of the timing t1 when the U phase lower arm control signal VUB' rises from "L" to "H", the U phase upper arm switching element T1 is off as shown in part C of Fig. 4 and the U phase lower arm switching element T4 is also still off as shown in part D of Fig. 4.

When the U-phase phase current IUM in part E of Fig. 4 is negative, that is, as of the time points t1 and t2, the current flows from the coil 8 to a motor drive power supply through the U phase upper arm reflux diode D1. For that reason, the U phase output voltage VUM becomes almost equal to the high-voltage power supply voltage VDC as shown in part F of Fig. 4.

When the U-phase phase current IUM in part E of Fig. 4 is positive, that is, as of the time points t3 and t4, the current flows from the ground potential GND to the coil 8 through the U phase lower arm reflux diode D4. For that reason, the U phase output voltage VUM becomes almost zero as shown in part F of Fig. 4.

The output voltage VUL of the level shift circuit L1 in part G of Fig. 4 is a result of reducing the U phase output voltage VUM in part F of Fig. 4. Therefore, the amplitude of the output voltage VUL is smaller than the amplitude of the U phase output voltage VUM while their waveforms are the same.

The U phase current polarity signal VUP in part H of Fig. 4 is a result of inverting the output voltage VUL of the level shift circuit L1 in timing of the rise of the U phase lower arm control signal VUB' in part B of Fig. 4.

If part E of Fig. 4 is compared with part I, it is understandable that the U phase current polarity signal VUP changes from "L" to "H" when the U-phase phase current IUM changes from negative to positive. The timing when the U phase current polarity signal VUP changes from "L" to "H" is the time point t3 when the U-phase phase current IUM changes to positive and the U phase lower arm control signal VUB' rises for the first time.

In Fig. 3, the output voltage VUL of the level shift circuit L1 is directly inputted to the latch circuit F1. However, it can also be rendered as a circuit of the same function by adding one or more stages of MOS inverters between them.

In Fig. 3, the lower arm control signal VUB' is directly inputted to the latch circuit F1. However, it can also be rendered as a circuit of the same function by adding one or more stages of the MOS inverters between them.

Figs. 3 and 4 show the example of detecting the current polarity of the U phase. As a matter of course, it is the same in the case of detecting the current of another phase.

Fig. 5 is a second example of the current polarity detection circuit 13. Fig. 5 shows an example in which the current polarity detection circuit 13 detects the current polarity of the U phase. As shown in Fig. 5, the inverter apparatus includes the U phase upper arm switching element T1, the U phase lower arm switching element T4, the U phase upper arm driving circuit K1 and the U phase lower arm driving circuit K4. The coil 8 is connected to a middle point between the U phase upper arm switching element T1 and the U phase lower arm switching element T4. The U phase upper arm switching element T1 has the U phase upper arm reflux diode D1 connected back to back thereto, and the U phase lower arm switching element T4 has the U phase lower arm reflux diode D4 connected back to back thereto. The shunt resistance Rs is connected between the U phase lower arm switching element T4 and a ground potential GND.

The current polarity detection circuit 13 shown in Fig. 5 includes a comparator CM1 and a latch circuit F2. The comparator CM1 determines positive or negative of a voltage VUR of the shunt resistance Rs. The latch circuit F2 inverts a comparator output voltage VUC in timing of a fall of the U phase lower arm control signal VUB' so as to output it as the U phase current polarity signal VUP. The latch circuit F2 holds an immediately preceding signal until the timing of a next fall of the U phase lower arm control signal VUB'.

In Fig. 5, when the U phase upper arm switching element T1 is off and the U phase lower arm switching element T4 is on, the U phase current polarity is detected by monitoring the direction of the current passing through the shunt resistance Rs in timing of the fall of the U phase lower arm control signal VUB'.

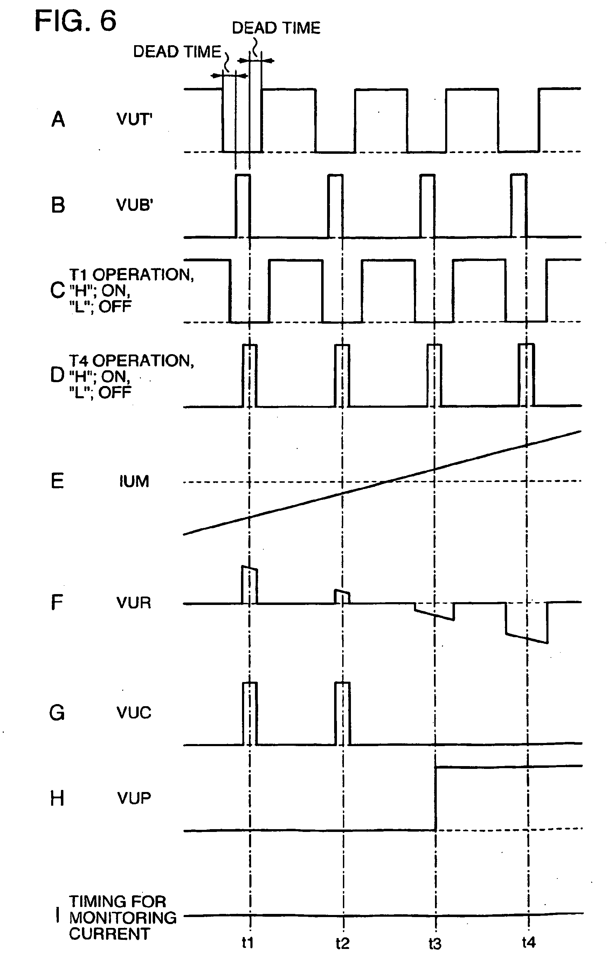

Fig. 6 is an example of a timing chart of the current polarity detection circuit 13 shown in Fig. 5. The operation of the current polarity detection circuit 13 in Fig. 5 will be described with reference to Fig. 6. Part A of Fig. 6 shows an upper arm control signal VUT', and part B of Fig. 6 shows a lower arm control signal VUB'. Part C of Fig. 6 shows the operation of the U phase upper arm switching element T1, and part D of Fig. 6 shows the operation of the U phase lower arm switching element T4. Reference character H denotes on, and L denotes off. Part E of Fig. 6 shows a U-phase phase current IUM. The U-phase phase current IUM is a current flowing into the coil 8 from a U phase output terminal, where the polarity is positive when the current flows into the coil 8 while it is negative when the current flows out of the coil 8. Part F of Fig. 6 shows a voltage VUR of the shunt resistance Rs, part G of Fig. 6 shows the output voltage VUC of the comparator CM1, and part H of Fig. 6 shows the output voltage of the latch circuit F2. Part I of Fig. 6 shows timing for monitoring the current, that is, the timing when the latch circuit F2 latches the output voltage VUC of the comparator CM1.

As shown in part I of Fig. 6, the timing for monitoring the current is time points t1, t2, t3 and t4 when the U phase lower arm control signal VUB' falls from "H" to "L". As is understandable by comparing part B of Fig. 6 with part D, the operation of the U phase lower arm switching element T4 is slightly delayed from the U phase lower arm control signal VUB'. Therefore, as of the timing t1 when the U phase lower arm control signal VUB' falls from "H" to "L", the U phase upper arm switching element T1 is off as shown in part C of Fig. 6 while the U phase lower arm switching element T4 is still on as shown in part D of Fig. 6.

When the U-phase phase current IUM in part E of Fig. 6 is negative, that is, as of the time points t1 and t2, the U phase lower arm switching element T4 is on as shown in part D of Fig. 6, and the current flows from the coil 8 to the ground potential GND through the U phase lower arm switching element T4 and the shunt resistance Rs. For that reason, the voltage VUR of the shunt resistance Rs becomes positive as shown in part F of Fig. 6.

When the U-phase phase current IUM in part E of Fig. 6 is positive, that is, as of the time points t3 and t4, the U phase upper arm switching element T1 is off as shown in part C of Fig. 6, and so the current flows from the ground potential GND to the coil 8 through the shunt resistance Rs and the U phase lower arm reflux diode D4. For that reason, the voltage VUR of the shunt resistance Rs becomes negative as shown in part F of Fig. 6.

The comparator output voltage VUC in part G of Fig. 6 shows the result of determining positive or negative of the voltage VUR of the shunt resistance Rs. In the case where the voltage VUR of the shunt resistance Rs is positive, the comparator output voltage VUC is "H". In the case where the voltage VUR of the shunt resistance Rs is negative, the comparator output voltage VUC is "L".

The U phase current polarity signal VUP in part H of Fig. 6 is a result of inverting the comparator output voltage VUC in timing of the fall of the U phase lower arm control signal VUB'.

If part E of Fig. 6 is compared with part H, it is understandable that the U phase current polarity signal VUP changes from "L" to "H" when the U-phase phase current IUM changes from negative to positive. The timing when the U phase current polarity signal VUP changes from "L" to "H" is the time point t3 when the U-phase phase current IUM changes to positive and the U phase lower arm control signal VUB' rises for the first time.

In Fig. 5, the output voltage VUC of the comparator CM1 is directly inputted to the latch circuit F2. However, it can be rendered as a circuit of the same function by adding an MOS inverter of one or more stages between them. In Fig. 5, the lower arm control signal VUB' is directly inputted to the latch circuit F2. However, it can be rendered as a circuit of the same function by adding the MOS inverter of one or more stages between them. Figs. 5 and 6 show the example of detecting the current polarity of the U phase. As a matter of course, it is the same in the case of detecting the current polarity of another phase.

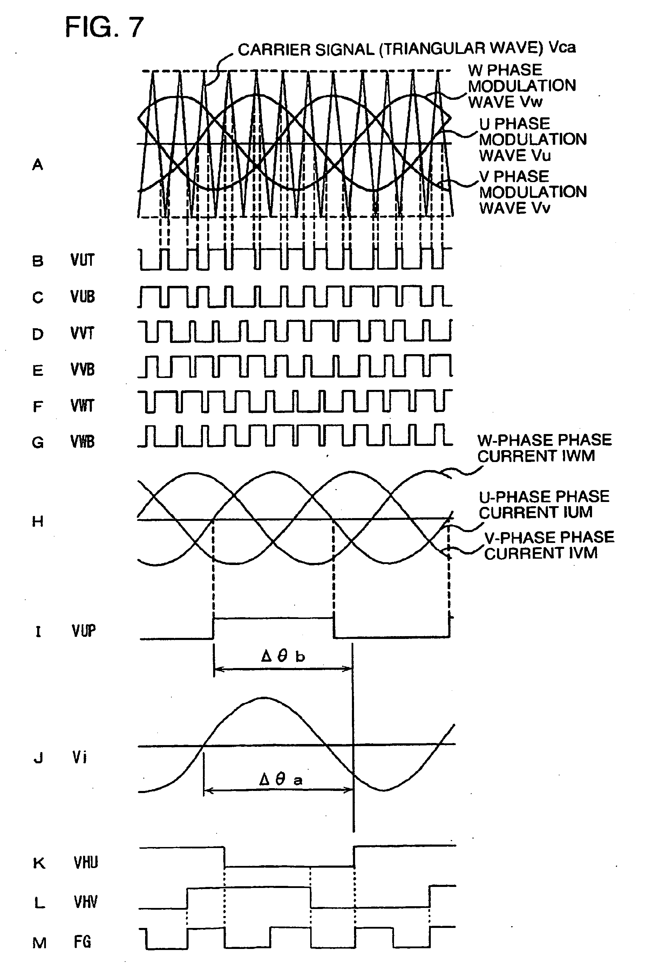

Next, the control exerted by the control semiconductor device 7 will be described. Fig. 7 is a timing chart showing an example of a control method of the present invention. Part A of Fig. 7 shows a carrier signal (triangular wave) Vca, a U phase modulation signal Vu, a V phase modulation signal Vv and a W phase modulation signal Vw. Part B of Fig. 7 shows the U phase upper arm control signal VUT, and part C of Fig. 7 shows the U phase lower arm control signal VUB. Part D of Fig. 7 shows the V phase upper arm control signal VVT, and part E of Fig. 7 shows the V phase lower arm control signal VVB. Part F of Fig. 7 shows the W phase upper arm control signal VWT, and part G of Fig. 7 shows the W phase lower arm control signal VWB. Part H of Fig. 7 shows the U-phase phase current IUM, a V-phase phase current IVM and a W-phase phase current IWM. Part I of Fig. 7 shows the U phase current polarity signal VUP, and part J of Fig. 7 shows a U phase induced voltage Vi. Part K of Fig. 7 shows the U phase magnetic pole position signal VHU, part L of Fig. 7 shows the V phase magnetic pole position signal VHV, and part M of Fig. 7 shows the revolution signal FG.

To perform a sine wave drive of the motor, the modulation signals Vu, Vv and Vw in the sine wave state are generated first. The control signals VUT, VUB, VVT, VVB, VWT and VWB are generated by comparing the modulation signals Vu, Vv and Vw in the sine wave state with the carrier signal (triangular wave) Vca. The switching elements are driven to apply the phase voltage to the coil 8 based on these control signals so that the phase currents IUM, IVM and IWM in the sine wave state pass through the coil 8. As the phase currents IUM, IVM and IWM in the sine wave state pass through the coil 8, the modulation signals Vu, Vv and Vw do not have to be sine waves but only the voltages between the modulation signals Vu-Vv, Vv-Vw and Vw-Vu should be in the sine wave state. As for the examples of the sine wave drive method whereby the modulation signals Vu, Vv and Vw are not in the sine wave state, there are the one called an HIP modulation method, the one called a two-phase modulation method and the like. These methods have an advantage of being able to render a modulation factor larger than 1, and so they are often used in general. The sine wave drive method performed by the control semiconductor device 7 may be the sine wave drive method whereby the modulation signals Vu, Vv and Vw are not in the sine wave state, such as the HIP modulation method or the two-phase modulation method.

Next, a method of phase control of the phase current of the motor will be described. A certain one-phase current polarity signal is generated by the current polarity detection circuit 13. The U phase current polarity signal VUP is generated in the example of Fig. 7. To maximize efficiency of the motor, it is necessary to control a phase difference between the phases of the phase current and the induced voltage.

The phase of the phase current for maximizing the efficiency is the phase that matches or approximately matches with the phase of the induced voltage. The phase difference between the induced voltage and the magnetic pole position signal is a fixed value determined by a mounting location of the Hall IC. In Fig. 7, the phase difference between the U phase induced voltage Vi and the U phase magnetic pole position signal VHU is indicated as Δθa.

The efficiency of the motor can be maximized by controlling the phase difference between the current polarity signal VUP and the magnetic pole position signal VHU. In Fig. 7, the phase difference between the U phase current polarity signal VUP and the U phase magnetic pole position signal is indicated as Δθb. The control semiconductor device 7 acquires Δθb from the current polarity signal VUP and the magnetic pole position signal VHU. In the case where Δθb is deviated from a predetermined value for maximizing the efficiency of the motor, the control semiconductor device 7 advances or delays the phases of the modulation signals Vu, Vv and Vw and thereby controls a phase voltage phase to be applied to the coil 8 so as to render Δθb closer to an optimal value. In this case, relative positions of the modulation signals Vu, Vv and Vw of each individual phase are maintained at an electrical angle of 120 degrees as a matter of course. Such control can put the phase currents of all the three phases in an optimal phase based on the current polarity signal of one phase. It is also possible, however, to exert the same control by using a two-phase or three-phase current polarity signal for a reason such as improving accuracy of current phase control.

If the phase control of the phase current of the motor by controlling the phase of the phase voltage of the motor is performed based on the current polarity signal by the above-mentioned method, it is possible to realize reduction in the torque ripple of the motor by the sine wave drive method and high-efficiency drive of the motor by current phase control at relatively low cost with no need to use an expensive current sensor or perform high-level arithmetic processing by using an expensive microcomputer. The current polarity signal has the timing of the rise of the signal from "L" to "H" and the timing of the fall of the signal from "H" to "L". It is also possible for the control semiconductor device 7 to use only the rise of the current polarity signal or only the fall thereof so as to exert control. For that reason, the current polarity signal should have required accuracy in either the rise or the fall thereof, in which case it does not matter even if the other includes a significant error.

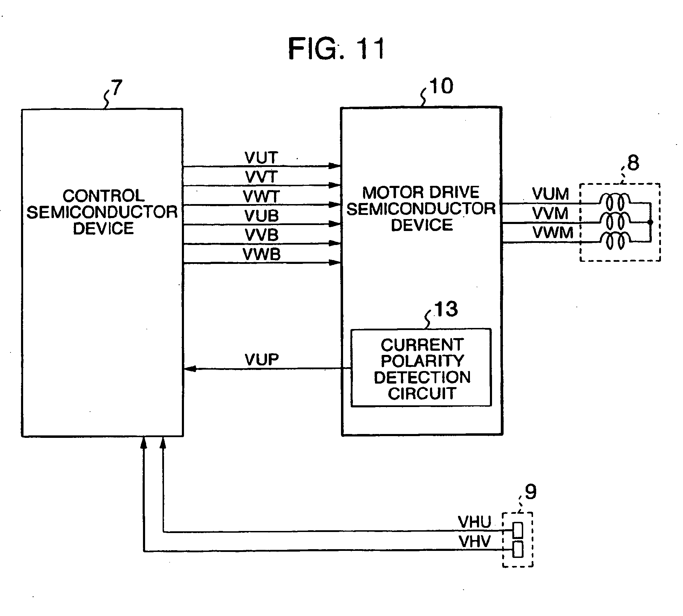

Fig. 11 is a diagram simply representing Fig. 1 showing this embodiment. Fig. 11 shows the control semiconductor device 7, coil 8, Hall IC 9, motor drive semiconductor device 10, current polarity detection circuit 13 and wiring, where the others are omitted and not shown. As shown in Fig. 11, this embodiment shows the case where the motor drive semiconductor device 10 includes the current polarity detection circuit 13.

In this embodiment, the motor drive semiconductor device 10 may include a part of the current polarity detection circuit 13, and the other portions may be placed outside the motor drive semiconductor device 10. As regards such examples, there are the cases where the circuit of Fig. 5 is used as the current polarity detection circuit 13, the motor drive semiconductor device 10 includes the comparator CM1 and the latch circuit F2, and a discrete resistance is used as the shunt resistance Rs.

In the case of using a current mode of Fig. 3 for the current polarity detection circuit 13 for instance, the current polarity detection circuit 13 includes the level shift circuit L1. As a voltage as high as the high-voltage power supply voltage VDC is applied to the level shift circuit L1, the level shift circuit L1 needs to be a high voltage circuit. For that reason, the current polarity detection circuit 13 should be provided in the motor drive semiconductor device 10 in such a case so as to render it lowest-cost and compact.

### [Second Embodiment]

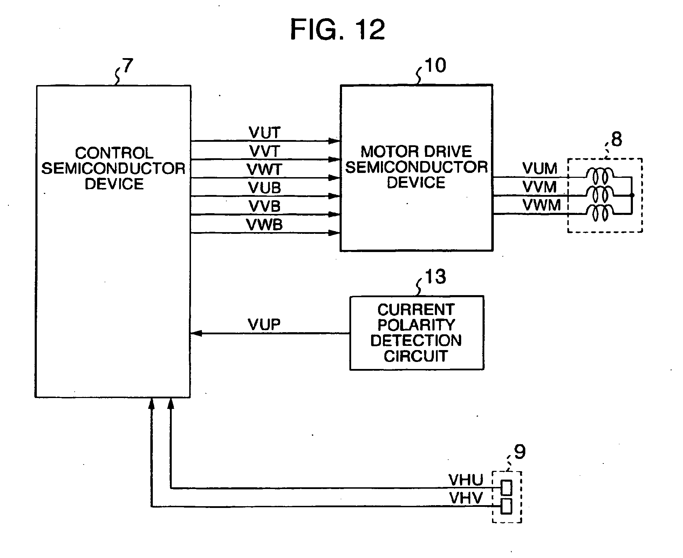

Fig. 12 shows this embodiment. Fig. 12 is a simply represented diagram equivalent to Fig. 11 of the first embodiment. According to this embodiment, the current polarity detection circuit 13 shown in the first embodiment is placed outside the motor drive semiconductor device 10 and the control semiconductor device 7 because the number of parts of the circuit is small as shown in Figs. 3 and 5. This embodiment is the same as the first embodiment otherwise.

### [Third Embodiment]

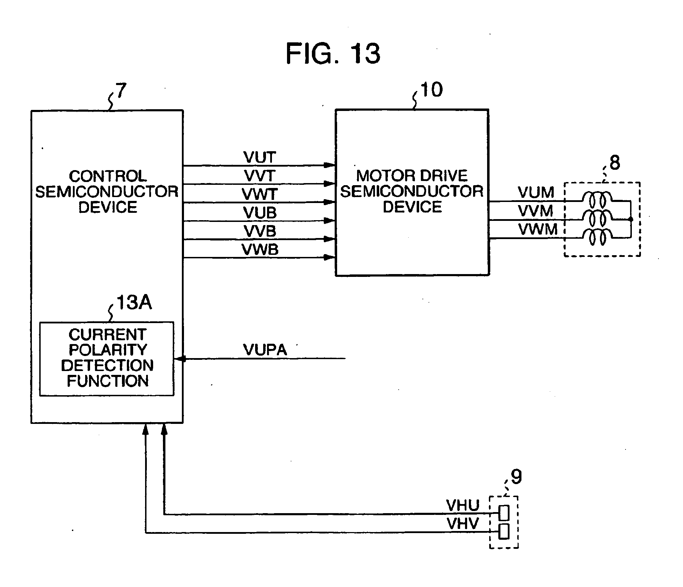

Fig. 13 shows this embodiment. Fig. 13 is a simply represented diagram equivalent to Fig. 11 of the first embodiment. Reference character VUPA in Fig. 13 denotes a voltage including current polarity information. In the case of detecting the current polarity by using a principle of operation of the circuit of Fig. 3 according to this embodiment, the output voltage VUL of the level shift circuit L1 is inputted to the control semiconductor device 7 as the voltage VUPA including the current polarity information for instance so as to perform the function of the latch circuit F1 in the control semiconductor device 7. In the case of detecting the current polarity by using the principle of operation of the circuit of Fig. 5 according to this embodiment, the voltage VUR of the shunt resistance Rs is inputted to the control semiconductor device 7 as the voltage VUPA including the current polarity information for instance so as to perform the functions of the comparator CM1 and latch circuit F2 in the control semiconductor device 7. Processing in the control semiconductor device 7 is performed by the circuit in the control semiconductor device 7 or by both the circuit and software. This embodiment is the same as the first embodiment otherwise.

### [Fourth Embodiment]

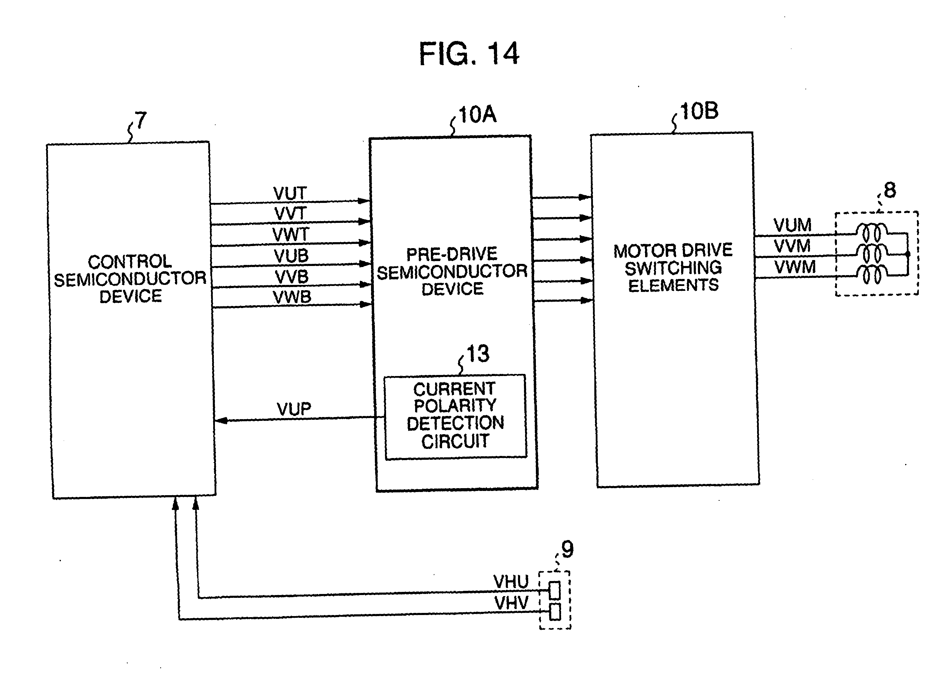

Fig. 14 shows this embodiment. Fig. 14 is a simply represented diagram equivalent to Fig. 11 of the first embodiment. According to this embodiment, the motor drive semiconductor device 10 is divided into a pre-drive semiconductor device 10A including the current polarity detection circuit 13 and motor drive switching elements 10B. According to the configuration of this embodiment, it is possible to drive a larger-capacity motor by rendering the motor drive switching elements 10B as the switching elements for a high current.

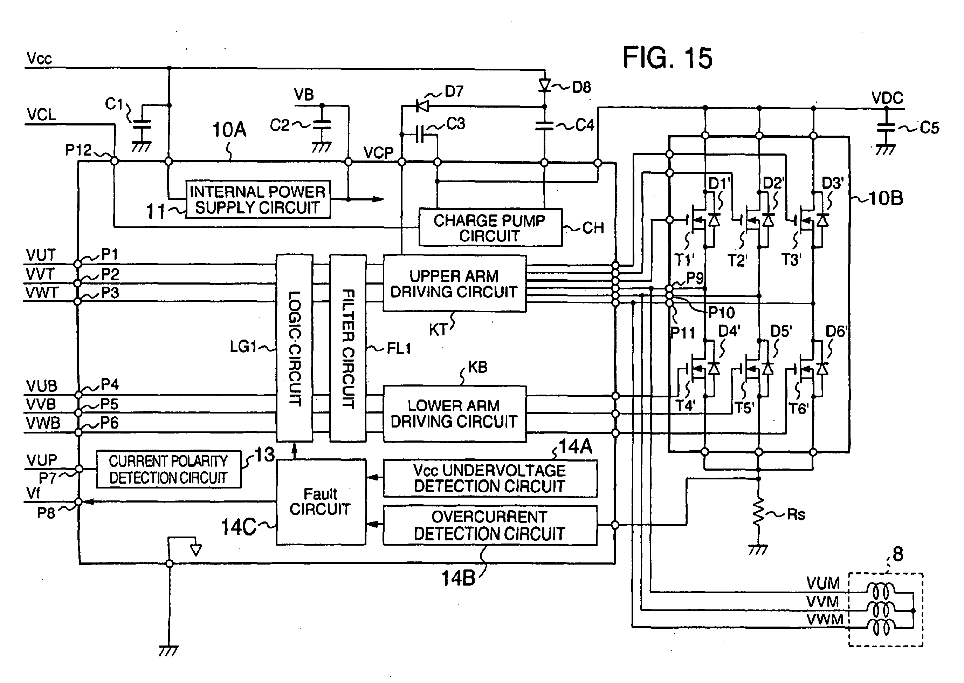

Fig. 15 is a diagram showing details of the pre-drive semiconductor device 10A and the motor drive switching elements 10B. While NMOSFETs are used as switching elements T1' to T6' in this embodiment, IGBTs or bipolar transistors may also be used. In the case of using power MOSFETs, PMOSFETs may be used as the upper switching elements T1' to T3'. In the case of using the power MOSFETs as the switching elements T1' to T6', parasitic diodes inside the MOSFETs may be used as reflux diodes D1' to D6'.

Fig. 15 is a diagram in which the motor drive semiconductor device 10 of Fig. 2 is divided into the pre-drive semiconductor device 10A and the motor drive switching elements 10B. It is the same as Fig. 2 otherwise, and so a detailed description thereof will be omitted.

In Fig. 15, the pre-drive portion is composed of one pre-drive semiconductor device 10A which is sealed by a resin, for instance, an epoxy resin having a filler such as silica dispensed in one package. However, there are also the cases where the pre-drive portion is composed of multiple ICs. As for such an example, there is the case where it is composed of three pre-drive semiconductor devices equivalent to one phase. In the case of using the PMOSFETs or PNP transistors as the upper arm switching elements, the pre-drive portion can be implemented by a very simple circuit configuration so that the pre-drive portion can be composed of a discrete circuit using the bipolar transistors, resistances and the like without using the ICs.

In the example of Fig. 15, the motor drive switching elements 10B are sealed by a resin in one package. However, there are also the cases where the motor drive switching elements 10B are composed of multiple packages. For instance, there are the cases where the upper arm switching elements and the lower arm switching elements are sealed in separate packages to configure them in two packages, all the six switching elements are sealed in separate packages, and the upper arm switching element and the lower arm switching element equivalent to one phase are housed in one package to configure them in three packages in total.

### [Fifth Embodiment]

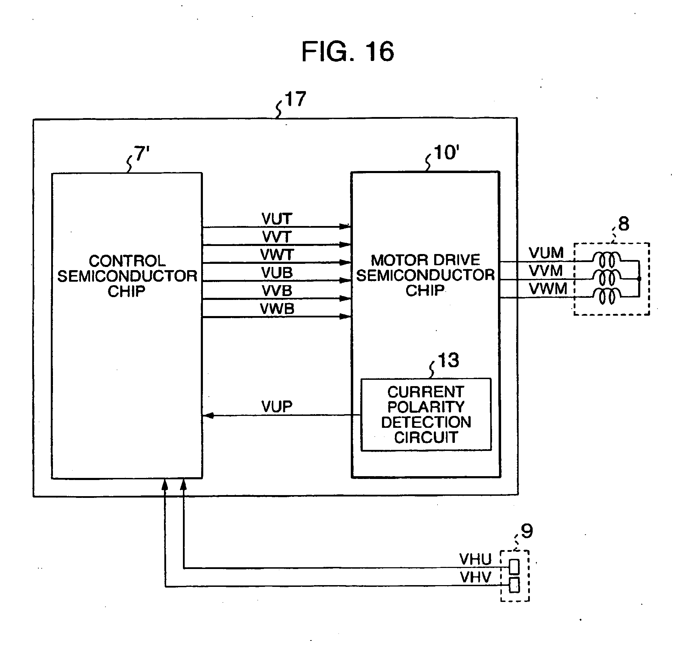

Fig. 16 shows this embodiment. Fig. 16 is a simply represented diagram equivalent to Fig. 11 of the first embodiment. According to this embodiment, a control semiconductor chip 7' and a motor drive semiconductor chip 10' are placed in one package. Reference numeral 17 of Fig. 16 denotes a one package motor drive semiconductor device containing the control semiconductor chip. The wiring between the control semiconductor chip 7' and the motor drive semiconductor chip 10' is connected by wire bonding inside the package for instance. The function of the control semiconductor chip 7' is the same as the function of the control semiconductor device 7 of the first embodiment. And the function of the motor drive semiconductor chip 10' is the same as the function of the motor drive semiconductor device 10 of the first embodiment.

The motor drive semiconductor chip 10' generates heat and its temperature rises when driving the motor. To suppress a temperature rise of the control semiconductor chip 7', the control semiconductor chip 7' and the motor drive semiconductor chip 10' are placed on separate stages. In Fig. 16, the current polarity detection circuit 13 is included in the motor drive semiconductor chip 10'. However, the current polarity may also be detected in the control semiconductor chip 7'. In Fig. 16, the motor drive portion is composed of one chip of the motor drive semiconductor chip 10'. However, the motor drive portion may also be composed of multiple chips. In either case, the motor drive portion and the microcomputer are composed as one package so that hey can be miniaturized in comparison with the case of two or more packages. The control semiconductor chip 7' may be either a chip of a general-purpose microcomputer or a chip of a motor drive-specific IC.

### [Sixth Embodiment]

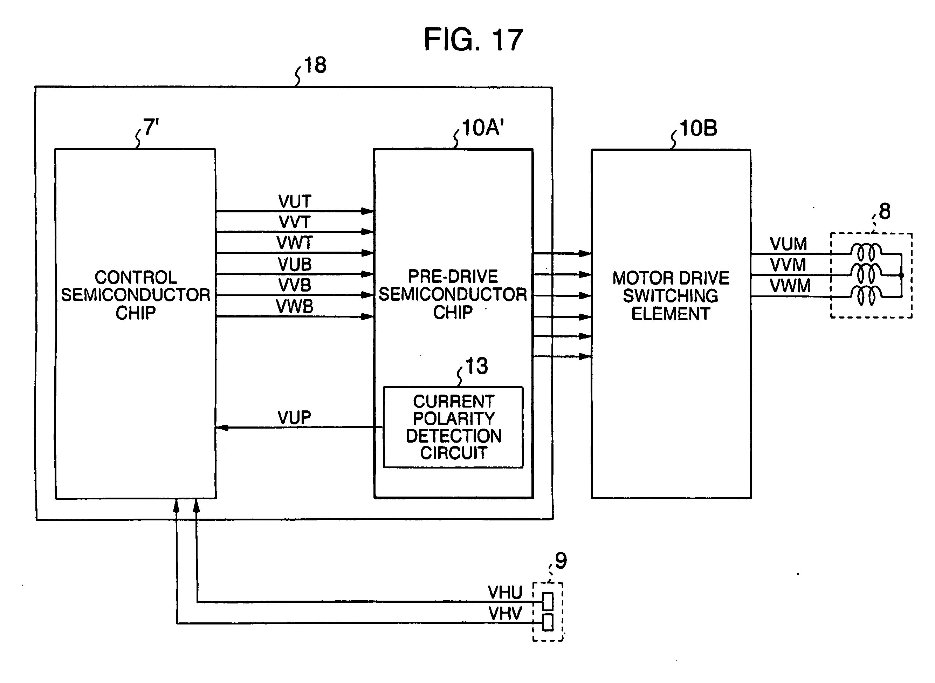

Fig. 17 shows this embodiment. Fig. 17 is a simply represented diagram equivalent to Fig. 11 of the first embodiment. According to this embodiment, a control semiconductor chip 7' and a pre-drive semiconductor chip 10A' are placed in one package. Reference numeral 18 of Fig. 17 denotes a one package pre-drive semiconductor device containing the control semiconductor chip. The wiring between the control semiconductor chip 7' and the pre-drive semiconductor chip 10A' is connected by the wire bonding inside the package for instance. According to this embodiment, it is possible to drive a large-capacity motor by rendering the motor drive switching elements 10B as the switching elements for a high current. The function of the control semiconductor chip 7' is the same as the function of the control semiconductor device 7 of the first embodiment. And the function of the pre-drive semiconductor chip 10A' is the same as that of the pre-drive semiconductor chip 10A of the fourth embodiment. In Fig. 17, the current polarity detection circuit 13 is included in the pre-drive semiconductor chip 10A'. However, the current polarity may also be detected in the control semiconductor chip 7'. As the pre-drive semiconductor chip 10A' includes no switching element, a temperature rise of the pre-drive semiconductor chip 10A' is smaller than that of the motor drive semiconductor chip 10' of Fig. 16. For that reason, the control semiconductor chip 7' and the pre-drive semiconductor chip 10A' may be placed on the same stage.

### [Seventh Embodiment]

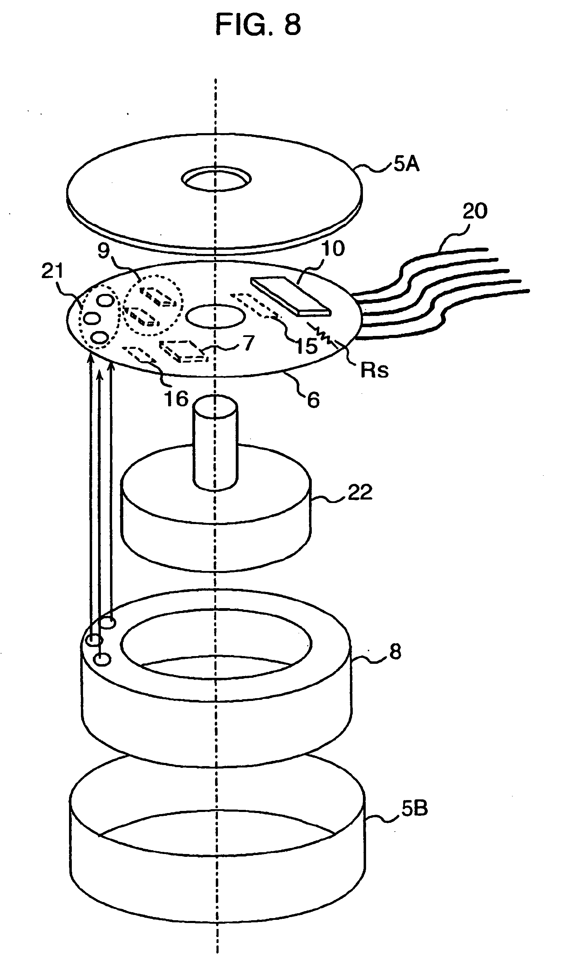

Fig. 8 shows an example of the structure of the motor 5 according to this embodiment. The motor shown in Fig. 8 is a three-phase motor, where the control semiconductor device 7, motor drive semiconductor device 10, high-voltage power supply voltage detection circuit 15, a temperature detection circuit 16, shunt resistance Rs and Hall IC 9 shown in Fig. 1 of the first embodiment are placed on the build-in board 6. The motor 5 of this embodiment has the coil 8 fitted into a motor housing bottom 5B. A permanent magnet rotor 22 is mounted inside the coil by providing an adequate gap so as not to contact the coil 8. The build-in board 6 is mounted on top of the permanent magnet rotor 22. The Hall IC 9 placed on the build-in board 6 is placed on the surface of the permanent magnet rotor 22 side (underside surface in Fig. 8) in order to facilitate detection of the magnetic pole position of the permanent magnet rotor 22. For instance, the control semiconductor device 7, high-voltage power supply voltage detection circuit 15, temperature detection circuit 16 and shunt resistance Rs are placed on the permanent magnet rotor 22 side (underside surface in Fig. 8) while the motor drive semiconductor device 10 is placed on the opposite side of the permanent magnet rotor 22 side (upside surface in Fig. 8).

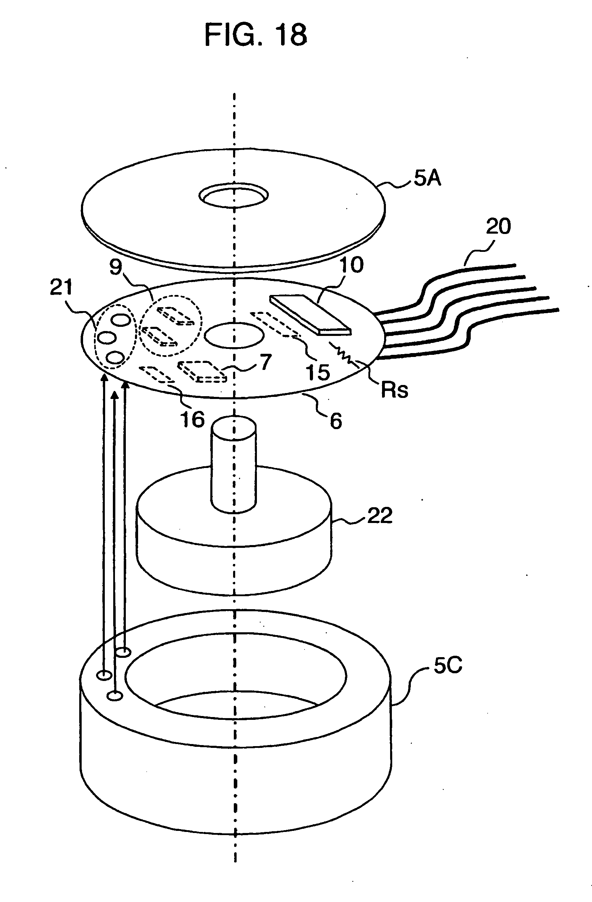

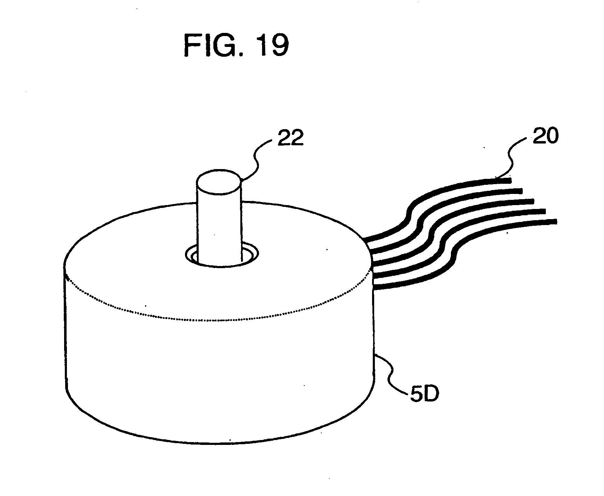

In the case of using the temperature detection circuit 16 for temperature detection of the control semiconductor device 7, the thermistor in the temperature detection circuit 16 is placed close to the control semiconductor device 7. The build-in board 6 has a coil connecting terminal 21 placed thereon to connect the coil 8 by soldering. Wirings 20 are connected to the build-in board 6 by soldering. The outgoing wirings 20 consist of five lines of a VDC wiring, a Vcc wiring, a Vsp wiring, an FG wiring and a GND wiring. A housing top portion 5A of the motor is placed on top of the build-in board 6 like a lid. For that reason, in a state where the motor is assembled, the build-in board 6 is placed inside the motor housing consisting of the motor housing top portion 5A and a motor housing bottom portion 5B. The motor 5 may be configured by molding the coil 8 instead of using the motor housing bottom portion 5B. Fig. 18 shows the diagram in this state. Reference character 5C of Fig. 18 denotes the molded coil. It is the same as Fig. 8 otherwise. The motor 5 may also have a configuration in which the coil 8 and the build-in board 6 are molded instead of using the motor housing top portion 5A and motor housing bottom portion 5B. Fig. 19 shows the diagram in this case. Unlike Figs. 8 and 18, Fig. 19 is a diagram showing a state of completion of the motor. A mold portion 5D has the coil 8 and the build-in board 6 molded therein. And the build-in board 6 has the control semiconductor device 7, motor drive semiconductor device 10, high-voltage power supply voltage detection circuit 15 and temperature detection circuit 16, shunt resistance Rs and Hall IC 9 placed thereon as with Fig. 8.

### [Eighth Embodiment]

This embodiment applied the motor according to the seventh embodiment to an air conditioner. The air conditioner of this embodiment has a compressor for compressing a refrigerant, an outdoor heat exchanger, a compressor drive motor for driving the compressor, and an outdoor fan motor for sending air to an outdoor heat exchanger included in an outdoor unit, and also has an indoor heat exchanger and an indoor fan motor for sending air to the indoor heat exchanger in an indoor unit so as to perform air conditioning or heating by switching the direction of a refrigerant flow with a valve.

If a 120-degree rectangular wave drive method motor of the conventional technique is used as the outdoor fan motor of the air conditioner, noise due to vibration of the motor is generated. To reduce this noise, the 120-degree rectangular wave drive method motor uses an antivibration rubber. The antivibration rubber is used for a fixed portion for fixing the fan motor to the outdoor unit body and between a permanent magnet and a shaft of the permanent magnet rotor or between the shaft and the fan for instance. According to this embodiment, the torque ripple of the motor is reduced to reduce the vibration of the motor by the sine wave drive method so that the noise can be reduced without using the antivibration rubber. As a matter of course, the antivibration rubber may also be used for the motor of the present invention in order to further reduce the noise.

The motor according to the seventh embodiment may also be used as the indoor fan motor of the air conditioner. In that case, it is possible to realize the operation with little noise as in the case of the outdoor unit because of little vibration of the motor.

Variations and modifications are possible within the scope of the appended claims.

## Claims

1. A motor drive unit for driving a three-phase motor (5), comprising:
a motor drive semiconductor device (10); and control semiconductor device (7), wherein
the motor drive semiconductor device (10) has at least one semiconductor chip resin-sealed in one package, the motor drive semiconductor device (10) comprises:
six switching elements (T1 to T6) for driving the three-phase motor (5);
three output terminals (P9, P10, P11) for applying an output voltage to each of three terminals of a coil (8) of the three-phase motor (5);
driving circuits for driving the six switching elements (T1 to T6); and
six control signal input terminals (P1 to P6) for inputting a control signal for on/off-controlling each of the six switching elements (T1 to T6), wherein
the motor drive semiconductor device (10) further comprises:
a current polarity detection circuit (13) for detecting a current polarity of a phase current of the three-phase motor (5) and outputting a current polarity signal (VUP); and
a current polarity signal output terminal (P7) for outputting the current polarity signal (VUP) from the motor drive semiconductor device (10) to outside, wherein
the control semiconductor device (7) inputs the current polarity signal (VUP) outputted by the motor drive semiconductor device (10), controls phase current phases of the motor (5) and outputs six control signals (VUT, WT, VWT, VUB, VVB, VWB) for on/off-controlling the six switching elements (T1 to T6); and
each of the six control signals (VUT, VVT, VWT, VUB, VVB, VWB) outputted by the control semiconductor device (7) is inputted to each of the six control input terminals (P1 to P6) of the motor drive semiconductor device (10); and
wherein the current polarity detection circuit (13) includes:
a level shift circuit (L1) for converting a voltage of an output terminal connected to a terminal of the coil (8) of the motor (5) to a lower voltage and outputting the lower voltage; and
a latch circuit (F1) for holding information on the voltage outputted by the level shift circuit (L1) in timing when an upper arm switching element (T1) and a lower arm switching element (T4) are both off.

2. The motor drive unit according to claim 1, wherein:
the latch circuit (F1) holds an output signal of the level shift circuit (L1) in timing when either a control signal of an upper arm switching element (T1) of a relevant phase or a control signal of a lower arm switching element (T4) of the relevant phase changes from an off signal to an on signal.

3. A three-phase motor (5) comprising a motor drive unit including a motor drive semiconductor device (10), and a control semiconductor device (7), wherein:
the motor drive unit is a motor drive unit according to claim 1 or claim 2.

4. A fan motor for sending air to an outdoor heat exchanger or an indoor heat exchanger of an air conditioner including a compressor for compressing a refrigerant, the outdoor heat exchanger for performing heat exchange of a refrigerant and the indoor heat exchanger for performing heat exchange of a refrigerant, wherein
the fan motor is a three-phase motor (5) according to claim 3.

## Patentansprüche

1. Motorantriebseinheit zum Steuern eines Drehstrommotors (5), mit:
einer Motorantriebs-Halbleitervorrichtung (10); und einer Steuer-Halbleitervorrichtung (7), wobei
die Motorantriebs-Halbleitervorrichtung (10) zumindest einen in einem Gehäuse harzversiegelten Halbleiterchip aufweist und die Motorantriebs-Halbleitervorrichtung (10) Folgendes umfasst:
sechs Schaltelemente (T1 bis T6) zum Ansteuern des Drehstrommotors (5);
drei Ausgangsanschlüsse (P9, P10, P11) zum Anlegen einer Ausgangsspannung an jeden der drei Anschlüsse einer Spule (8) des Drehstrommotors (5);
Ansteuerschaltungen zum Ansteuern der sechs Schaltelemente (T1 bis T6); und
sechs Steuersignal-Eingangsanschlüsse (P1 bis P6) zum Eingeben eines Steuersignals zum Ein-/Aus-Steuern von jedem der sechs Schaltelemente (T1 bis T6), wobei
die Motorantriebs-Halbleitervorrichtung (10) weiterhin Folgendes umfasst:
eine Stromschritt-Erfassungsschaltung (13) zum Erfassen eines Stromschritts eines Phasenstroms des Drehstrommotors (5) und Ausgeben eines Stromschrittsignals (VUP); und
einen Stromschrittsignal-Ausgangsanschluss (P7) zum Ausgeben des Stromschrittsignals (VUP) aus der Motorantriebs-Halbleitervorrichtung (10) nach außen, wobei
die Steuer-Halbleitervorrichtung (7) das von der Motorantriebs-Halbleitervorrichtung (10) ausgegebene Stromschrittsignal (VUP) eingibt, Phasenstromphasen des Motors (5) steuert und sechs Steuersignale (VUT, VVT, VWT, VUB, VVB, VWB) zum Ein-/Aus-Steuern der sechs Schaltelemente (T1 bis T6) ausgibt; und
jedes der sechs von der Steuer-Halbleitervorrichtung (7) ausgegebenen Steuersignale (VUT, VVT, VWT, VUB, VVB, VWB) in jeden der sechs Steuereingangsanschlüsse (P1 bis P6) der Motorantriebs-Halbleitervorrichtung (10) eingegeben wird; und
wobei die Stromschritt-Erfassungsschaltung (13) Folgendes beinhaltet:
eine Niveauverschiebungsschaltung (L1) zum Umwandeln einer Spannung des mit einem Anschluss der Spule (8) des Motors (5) verbundenen Ausgangsanschlusses in eine niedrigere Spannung und Ausgeben der niedrigeren Spannung; und
eine Verriegelungsschaltung (F1) zum Halten von Information über die von der Niveauverschiebungsschaltung (L1) ausgegebene Spannung in einer Zeiteinstellung, wenn ein Oberarm-Schaltelement (T1) und ein Unterarm-Schaltelement (T4) ausgeschaltet sind.

2. Motorantriebseinheit nach Anspruch 1, wobei:
die Verriegelungsschaltung (F1) ein Ausgangssignal der Niveauverschiebungsschaltung (L1) in einer Zeiteinstellung hält, wenn sich entweder ein Steuersignal eines Oberarm-Schaltelements (T1) einer relevanten Phase oder ein Steuersignal eines Unterarm-Schaltelements (T4) der relevanten Phase von einem Aus-Signal in ein Ein-Signal ändert.

3. Drehstrommotor (5) mit einer Motorantriebseinheit einschließlich einer Motorantriebs-Halbleitervorrichtung (10) und einer Steuer-Halbleitervorrichtung (7), wobei:
die Motorantriebseinheit eine Motorantriebseinheit nach Anspruch 1 oder Anspruch 2 ist.

4. Gebläsemotor zum Senden von Luft an einen Außen-Wärmetauscher oder einen Innen-Wärmetauscher einer Klimaanlage, mit einem Kompressor zum Komprimieren eines Kühlmittels, dem Außen-Wärmetauscher zum Durchführen eines Wärmeaustauschs eines Kühlmittels und dem Innen-Wärmetauscher zum Durchführen eines Wärmeaustauschs eines Kühlmittels, wobei
der Gebläsemotor ein Drehstrommotor (5) nach Anspruch 3 ist.

## Revendications

1. Unité d'entraînement de moteur pour entraîner un moteur triphasé (5), comportant :
un dispositif à semi-conducteurs d'entraînement de moteur (10), et un dispositif à semi-conducteurs de commande (7), dans laquelle
le dispositif à semi-conducteurs d'entraînement de moteur (10) a au moins une puce semi-conductrice scellée par résine dans un boîtier, le dispositif à semi-conducteurs d'entraînement de moteur (10) comportant :
six éléments de commutation (T1 à T6) pour entraîner le moteur triphasé (5),
trois bornes de sortie (P9, P10, P11) pour appliquer une tension de sortie à chacune des trois bornes d'une bobine (8) du moteur triphasé (5),
des circuits d'attaque pour attaquer les six éléments de commutation (T1 à T6), et
six bornes d'entrée de signal de commande (P1 à P6) pour entrer un signal de commande afin d'exécuter une commande visant à rendre passant/bloquer chacun des six éléments de commutation (T1 à T6), dans laquelle
le dispositif à semi-conducteurs d'entraînement de moteur (10) comporte en outre :
un circuit de détection de polarité de courant (13) pour détecter une polarité de courant d'un courant de phase du moteur triphasé (5) et délivrer en sortie un signal de polarité de courant (VUP), et
une borne de sortie de signal de polarité de courant (P7) pour délivrer en sortie le signal de polarité de courant (VUP) depuis le dispositif à semi-conducteur d'entraînement de moteur (10) vers l'extérieur, dans laquelle
le dispositif à semi-conducteurs de commande (7) entre le signal de polarité de courant (VUP) délivré en sortie par le dispositif à semi-conducteurs d'entraînement de moteur (10), commande les phases de courant de phase du moteur (5) et délivre en sortie six signaux de commande (VUT, VVT, VWT, VUB, VVB, VWB) afin d'exécuter une commande visant à rendre passant/bloquer les six éléments de commutation (T1 à T6), et
chacun des six signaux de commande (VUT, VVT, VWT, VUB, VVB, VWB) délivrés en sortie par le dispositif à semi-conducteurs de commande (7) est entré dans chacune des six bornes d'entrée de commande (P1 à P6) du dispositif à semi-conducteurs d'entraînement de moteur (10), et
dans laquelle le circuit de détection de polarité de courant (13) inclut :
un circuit de décalage de niveau (L1) pour convertir une tension de la borne de sortie connectée à une borne de la bobine (8) du moteur (5) en une tension inférieure et délivrer en sortie la tension inférieure, et
un circuit à verrouillage (F1) pour conserver des informations sur la tension délivrée en sortie par le circuit de décalage de niveau (L1) en synchronisation lorsqu'un élément de commutation de bras supérieur (T1) et un élément de commutation de bras inférieur (T4) sont tous les deux bloqués.

2. Unité d'entraînement de moteur selon la revendication 1, dans laquelle :
le circuit à verrouillage (F1) conserve un signal de sortie du circuit à décalage de niveau (L1) en synchronisation lorsque soit un signal de commande d'un élément de commutation de bras supérieur (T1) d'une phase appropriée, soit un signal de commande d'un élément de commutation de bras inférieur (T4) de la phase appropriée passe d'un signal bloqué à un signal passant.

3. Moteur triphasé (5) comportant une unité d'entraînement de moteur incluant un dispositif à semi-conducteurs d'entraînement de moteur (10), et un dispositif à semi-conducteurs de commande (7), dans lequel :
l'unité d'entraînement de moteur est une unité d'entraînement de moteur selon la revendication 1 ou à la revendication 2.

4. Moteur de ventilateur pour envoyer de l'air vers un échangeur de chaleur extérieur ou un échangeur de chaleur intérieur d'un climatiseur incluant un compresseur pour compresser un réfrigérant, l'échangeur de chaleur extérieur pour effectuer un échange de chaleur d'un réfrigérant et l'échangeur de chaleur intérieur pour effectuer un échange de chaleur d'un réfrigérant, dans lequel
le moteur de ventilateur est un moteur triphasé (5) selon la revendication 3.
